# EUROPEAN PATENT SPECIFICATION

(11) **EP 0 747 983 B1**
(45) Date of publication and mention of the grant of the patent: **11.08.1999**
(21) Application number: 96304264.3
(22) Date of filing: 07.06.1996
(51) Int. Cl.: H01M 4/50

(54) **Alkaline cell having a cathode including an additive**
Alkalische Zelle mit Additiv enthaltender Kathode
Cellule alcaline avec une cathode contenant un additif

(30) Priority: 07.06.1995 US 479590
(43) Date of publication of application: 11.12.1996
(73) Proprietor: EVEREADY BATTERY COMPANY, INC., St. Louis Missouri 63164 (US)
(72) Inventor: Swierbut, Wendi M., Westlake, Ohio 44145 (US); Nardi, John C., Brunswick, Ohio 44212 (US)
(74) Representative: Tubby, David George

(56) References cited:
- US-A- 4 207 391
- US-A- 4 549 943
- US-A- 5 516 604
- DATABASE WPI Section Ch, Week 8128 Derwent Publications Ltd., London, GB; Class A85, AN 81-50867D XP002012847 & JP-A-56 061 771 (NIPPON ELECTRIC KK) , 27 May 1981

## Description

The present invention relates generally to electrochemical cells including cathode additives and more particularly to primary alkaline electrochemical cells having cathodes formed of manganese dioxide, a tin dioxide additive, and other cathode components.

JP-56-061771 discloses a lithium or sodium battery having good leakage resistance, in which the cathode active material consists mainly of MnO₂, TiO₂, PbO₂, CuO, SnO₂, V₂O₅, Fe₂O₃ or their solid solutions or mixtures. US-A-4,207,391 relates to rechargeable aqueous alkaline batteries, in which a zinc anode is specially configured to avoid dendritic growth and changes in anode shape occurring during charge/discharge cycling. Additives such as tin components may be included in the electrolyte to enhance these effects.

A typical alkaline cell would normally comprise: a steel cylindrical can having a cathode comprising manganese dioxide as the active material and formed on the interior surface of the steel can; an anode comprising zinc and located in the center of the cell; a separator film located between the anode and the cathode; and an alkaline electrolyte simultaneously contacting the anode, the cathode, and the separator. A conductive anode current collector is then generally inserted into the anode active material and a seal assembly closes the open end of the steel can.

A primary goal in the design of alkaline batteries is to increase the service performance of the cell. The service performance is the length of time taken for the cell to discharge under a given load to a specific voltage at which the cell is no longer useful for its intended purpose. One approach which has been taken to increase service performance was to increase the interior volume of the cell in order to increase the amount of active materials within the cell. However, the commercial external size of the cell is fixed, thereby limiting the ability to increase the amounts of active materials within the cell. In order to accommodate more active materials within the cell while maintaining the external size of the cell, the steel label of the conventional alkaline cell has been replaced with one made of thinner metalized plastic film. Thus, the steel can may be enlarged to provide a greater internal volume. By switching to a thinner plastic film label, the service performance of a typical alkaline cell was significantly increased.

Another approach taken to increase the service performance of a cell is to provide for better utilization of the materials of the electrodes. This approach is taken in U.S. Patent No. 5,342,712, which discloses utilizing an anatase titanium dioxide as an additive to a cathode having manganese dioxide as the active material.

Despite past increases in service performance, the need to find new ways to increase service performance remains the primary goal of cell designers.

WO-A-9625772 published on 22 August 1996 discloses an alkaline cell with a zinc anode and a manganese dioxide cathode composition comprising 5% SnO₂. This reference forms part of the state of the art under Article 54(3) only in respect of contracting states DE, FR and GB designated in the present application.

We have now discovered that the service performance of alkaline cells may be improved by the addition a tin dioxide additive to the active cathode material, i.e. the manganese dioxide (MnO₂). Thus, for contracting states other than DE, FR and GB, the present invention provides an aqueous alkaline electrochemical cell having an anode, a cathode, and an electrolyte, said cathode comprising a manganese dioxide active material and an additive comprising tin dioxide (SnO₂). For contracting states DE, FR and GB, the present invention provides an electrochemical cell having an anode, a cathode, and an electrolyte, said cathode comprising a manganese dioxide active material and an additive comprising SnO₂, characterised in that the additive is present in an amount of from 1 to 2 weight percent of the cathode.

The cathode of the present invention is particularly adapted for use in an electrochemical cell having a zinc anode and an alkaline electrolyte.

In a preferred embodiment, the SnO₂ additive constitutes from 0.1 to 10 weight percent of said cathode, preferably from 1 to 5 weight percent of said cathode and more preferably from 1 to 2 weight percent of said cathode.

The invention is further illustrated by reference to the accompanying drawings, in which:
Figure 1 is a cutaway perspective view of an example of an electrochemical cell constructed in accordance with the present invention;
Figure 2 is a comparative graph of the service performance of a standard alkaline cell having a cathode with no additives and electrochemical cells having cathodes with additives in accordance with the present invention; and
Figure 3 is a comparative graph of the service performance of a standard alkaline cell having a cathode with no additives and electrochemical cells having cathodes with additives in accordance with the present invention.

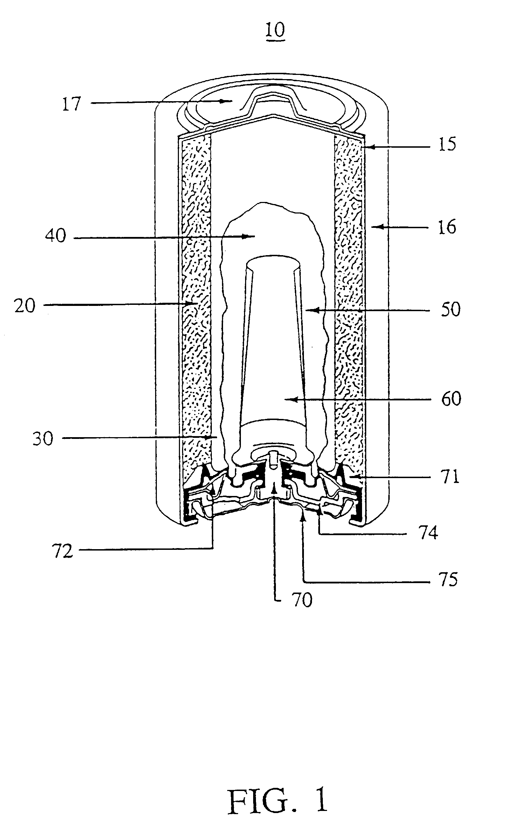

Figure 1 shows a cutaway view of a typical and preferred cylindrical alkaline battery 10. Alkaline battery 10 includes a steel can 15 having a cylindrical shape and one open end. A metalized, plastic film label 16 is formed about the exterior surface of steel can 15 except for the ends of steel can 15. At the closed end of steel can 15 is a positive cover 17 preferably formed of plated steel. Film label 16 is formed over the peripheral edge of positive cover 17.

A cathode 20, preferably formed of a mixture of manganese dioxide, graphite, 45% potassium hydroxide solution, deionized water, a TEFLON™ solution, and an additive, is formed about the interior side surface of steel can 15. A separator 30, which is preferably formed of a non-woven fabric that prevents migration of any solid particles in the battery, is disposed about the interior surface of cathode 20. An electrolyte 40 formed of potassium hydroxide is disposed in the interior of separator 30. An anode 50, preferably formed of zinc powder, a gelling agent and other additives, is disposed within electrolyte 40 in contact with a current collector 60, which may be formed of brass.

Current collector 60 contacts a brass rivet 70 formed at the open end of steel can 15. A nylon seal 71 is formed at the open end of steel can 15 to prevent leakage of the active ingredients contained in steel can 15. Nylon seal 71 contacts a metal washer 72 and an inner cell cover 74, which is preferably formed of steel. A negative cover 75, which is preferably formed of plated steel is disposed in contact with inner cell cover 74 and brass rivet 70, which contacts current collector 60 through a hole formed in nylon seal 71. Negative cover 75 is electrically insulated from steel can 15 by nylon seal 71.

The cathode of the present invention for a D-size cell is preferably composed of approximately 71.76 to 81.66 weight percent MnO₂, about 8.52 weight percent graphite, about 7.87 weight percent alkaline solution, such as a 45% KOH solution, about 0.36 weight percent deionized water, about 1.49 weight percent binder material. such as a TEFLON™ solution, and approximately 0. 1 to 10 weight percent of a SnO₂ additive. More preferably, the weight percent of MnO₂ is between about 76.76 and 80.76 and the weight percent of the SnO₂ additive is between 1 and 5 such that the combined weight percent of MnO₂ and the SnO₂ additive is a constant of preferably approximately 81.76. The amount of alkaline solution used in the cathode varies according to cell size as does the amount of the binder material.

The cathode can be made by weighing out the needed materials and mixing the MnO₂, the SnO₂ additive, and the graphite and blending to obtain a homogeneous mixture. Then, the deionized water, the TEFLON™ solution and the KOH solution are mixed with the dry cathode components to form a homogeneous cathode mix. The cathode mixture is then placed in steel can 15 and moulded into an annular, cylindrical shape.

As stated above, it has been discovered that the addition of small amounts of the above listed additive significantly increases the service performance of alkaline electrochemical cells. The following comparative examples illustrate the advantages obtained from practicing the present invention.

### COMPARATIVE EXAMPLE 1

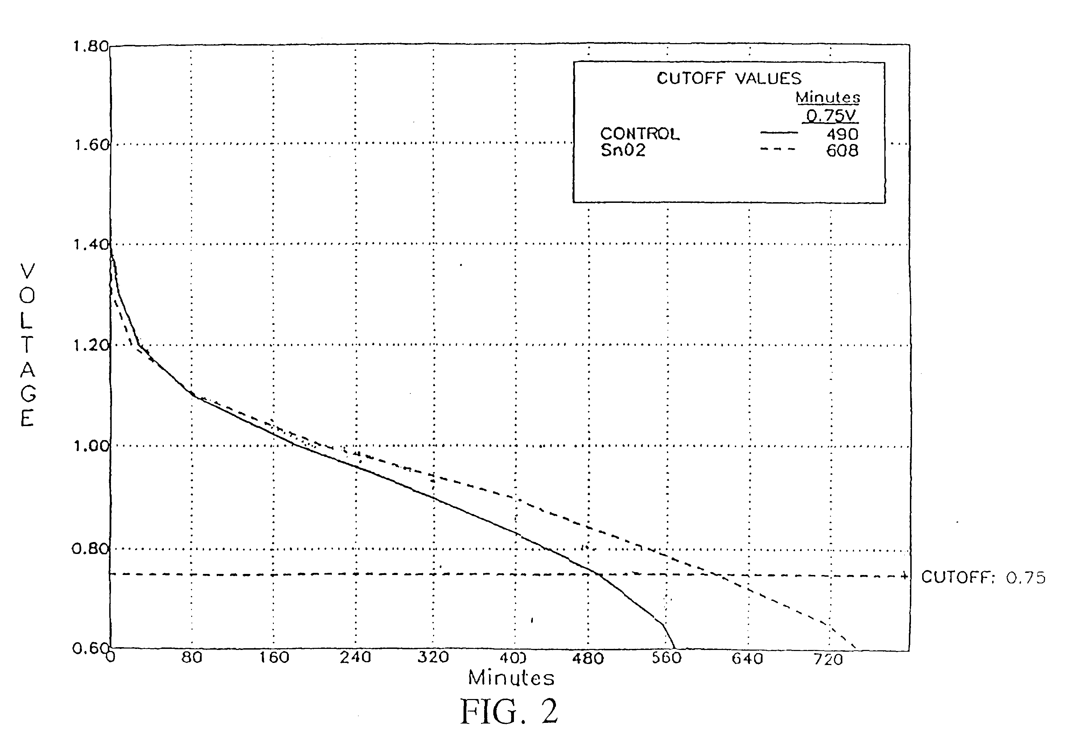

A control alkaline D-size cell was prepared as described above except no additive was included in the cathode and the weight percentage attributed to the additive was provided by additional MnO₂. Thus, the composition of the cathode in the control cell was approximately 81.76 weight percent MnO₂, about 8.52 weight percent graphite, about 7.87 weight percent of a 45% aqueous solution of potassium hydroxide (KOH), about 0.36 weight percent deionized water, and about 1.49 weight percent of a TEFLON™ binder solution. A first experimental D-size cell was prepared in the same way, except that some of the MnO₂ was replaced by SnO₂ to provide a cathode with 1.6 weight percent SnO₂. The two cells were continuously connected to a 1.0 Ohm load and the voltages of the cells were measured over a period of time. Figure 2 shows a graph of the time versus voltage discharge profiles of the two cells. At a cut-offvoltage of 0.75 volt, the first experimental cell including the SnO₂ additive exhibited a 24% increase in service performance over the control cell.

### COMPARATIVE EXAMPLE 2

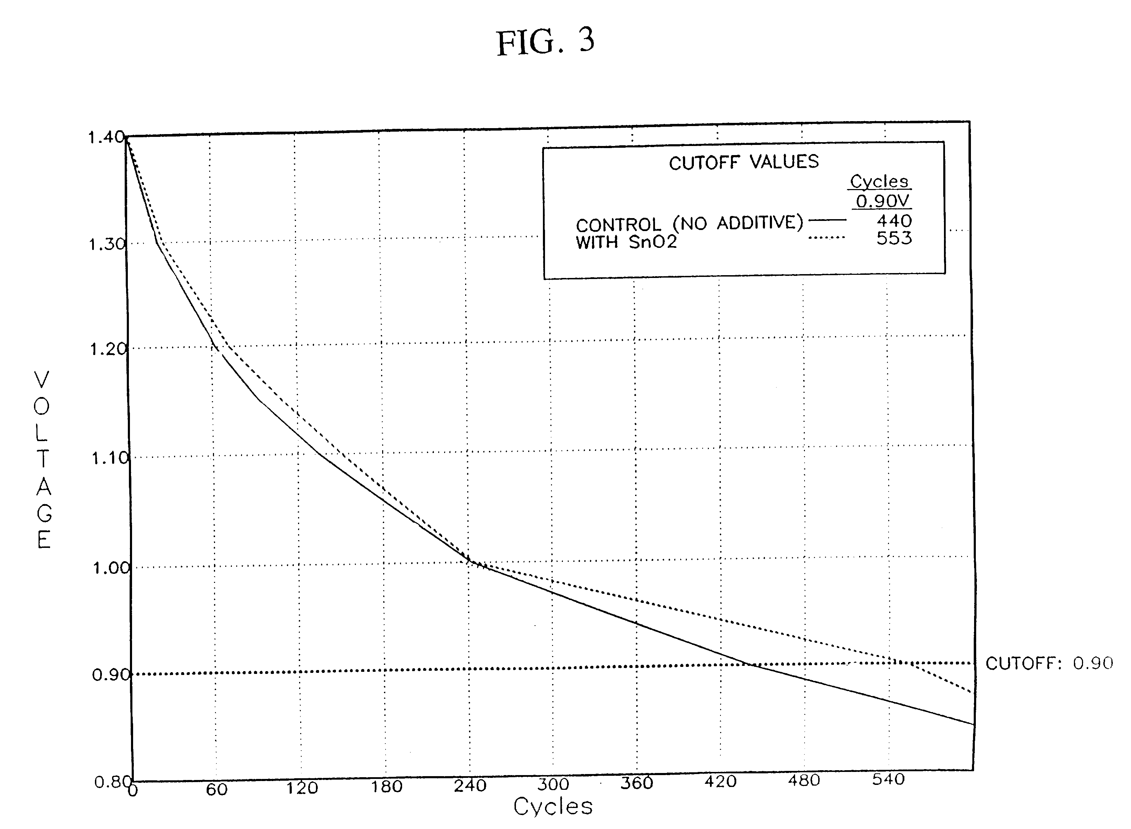

A control alkaline AA-size cell was prepared as described above using the same weight percentages as used for the control D-size cell except that no additive was included in the cathode and the weight percentage attributed to the additive was provided by additional MnO₂. A second experimental AA-size cell having a cathode with 1.6 weight percent SnO₂ was also constructed. The two cells were subjected to an IEC photoflash test by connecting the cells to a 1.8 Ohm load for cycles of fifteen seconds ON-and forty-five seconds OFF (i.e., each cycle equaling one minute) and the voltages of the cells were measured over a period of ON/OFF cycles. Figure 3 shows a graph of the cycle versus voltage discharge profiles of the two cells. At a cut-off voltage of 0.9 volt, the second experimental cell including the SnO₂ additive exhibited a 25% increase in service performance over the control cell.

Although the above comparative examples were restricted to D and AA-size cells, it will be appreciated by those skilled in the art that the increase in service performance may be obtained regardless of the size of the cell.

## Claims (Claims for the following Contracting State(s): BE, CH, LI, ES, IT, NL, SE)

1. An aqueous alkaline electrochemical cell having an anode, a cathode, and an electrolyte, said cathode comprising a manganese dioxide active material and an additive comprising SnO₂.

2. An electrochemical cell according to claim 1, in which said anode includes zinc.

3. An electrochemical cell according to claim 1 or claim 2, in which said additive constitutes from 0.1 to 10 weight percent of said cathode.

4. An electrochemical cell according to claim 3, in which said additive constitutes from 1 to 5 weight percent of said cathode.

5. An electrochemical cell according to claim 4, in which said additive constitutes from 1 to 2 weight percent of said cathode.

6. An electrochemical cell having an anode, a cathode, and an electrolyte, said cathode comprising a manganese dioxide active material and an additive comprising SnO₂, characterised in that the additive is present in an amount of from 1 to 2 weight percent of the cathode.

7. An electrochemical cell according to claim 6, in which said anode includes zinc and said electrolyte is an alkaline electrolyte.

## Claims (Claims for the following Contracting State(s): DE, FR, GB)

1. An electrochemical cell having an anode, a cathode, and an electrolyte, said cathode comprising a manganese dioxide active material and an additive comprising SnO₂, characterised in that the additive is present in an amount of from 1 to 2 weight percent of the cathode.

2. An electrochemical cell according to claim 1, in which said anode includes zinc and said electrolyte is an alkaline electrolyte.

## Patentansprüche (Patentansprüche für folgende(n) Vertragsstaat(en): BE, CH, LI, ES, IT, NL, SE)

1. Wäßerige alkalische elektrochemische Zelle, die eine Anode, eine Kathode und einen Elektrolyten enthält, wobei die Kathode ein aktives Material aus Mangandioxid und einen SnO₂ aufweisenden Zusatzstoff aufweist.

2. Elektrochemische Zelle gemäß Anspruch 1, in welcher die Anode Zink enthält.

3. Elektrochemische Zelle gemäß Anspruch 1 oder Anspruch 2, in welcher der Zusatzstoff 0,1 bis 10 Gewichtsprozente der Kathode ausmacht.

4. Elektrochemische Zelle gemäß Anspruch 3, in welcher der Zusatzstoff 1 bis 5 Gewichtsprozente der Kathode ausmacht.

5. Elektrochemische Zelle gemäß Anspruch 4, in welcher der Zusatzstoff 1 bis 2 Gewichtsprozente der Kathode ausmacht.

6. Elektrochemische Zelle, die eine Anode, eine Kathode und einen Elektrolyten enthält, wobei die Kathode ein aktives Material aus Mangandioxid und einen SnO₂ aufweisenden Zusatzstoff afweist, dadurch gekennzeichnet, daß der Zusatzstoff in einer Menge von 1 bis 2 Gewichtsprozenten der Kathode vorhanden ist.

7. Elektrochemische Zelle gemäß Anspruch 6, in welcher die Anode Zink enthält und der Elektrolyt ein alkalischer Elektrolyt ist.

## Patentansprüche (Patentansprüche für folgende(n) Vertragsstaat(en): DE, FR, GB)

1. Elektrochemische Zelle die eine Anode, eine Kathode und einen Elektrolyten enthält, wobei die Kathode ein aktives Material aus Mangandioxid und einen SnO₂ aufweisenden Zusatzstoff aufweist, dadurch gekennzeichnet, daß der Zusatzstoff in einer Menge von 1 bis 2 Gewichtsprozent der Kathode vorhanden ist.

2. Elektrochemische Zelle gemäß Anspruch 1, in welcher die Anode Zink enthält und der Elektrolyt ein alkalischer Elektrolyt ist.

## Revendications (Revendications pour l'(les) Etat(s) contractant(s) suivant(s): BE, CH, LI, ES, IT, NL, SE)

1. Pile électrochimique alcaline aqueuse comportant une anode, une cathode et un électrolyte, ladite cathode comprenant un matériau actif de dioxyde de manganèse et un additif comprenant du SnO₂.

2. Pile électrochimique suivant la revendication 1, dans laquelle ladite anode inclut du zinc.

3. Pile électrochimique suivant la revendication 1 ou la revendication 2, dans laquelle ledit additif constitue de 0,1 à 10% en poids de ladite cathode.

4. Pile électrochimique suivant la revendication 3, dans laquelle ledit additif constitue de 1 à 5% en poids de ladite cathode.

5. Pile électrochimique suivant la revendication 4, dans laquelle ledit additif constitue de 1 à 2% en poids de ladite cathode.

6. Pile électrochimique comportant une anode, une cathode et un électrolyte, ladite cathode comprenant un matériau actif de dioxyde de manganèse et un additif comprenant du SnO₂, caractérisée en ce que l'additif est présent selon une quantité allant de 1 à 2% en poids de la cathode.

7. Pile électrochimique suivant la revendication 6, dans laquelle ladite anode inclut du zinc et ledit électrolyte est un électrolyte alcalin.

## Revendications (Revendications pour l'(les) Etat(s) contractant(s) suivant(s): DE, FR, GB)

1. Pile électrochimique comportant une anode, une cathode et un électrolyte, ladite cathode comprenant un matériau actif de dioxyde de manganèse et un additif comprenant du SnO₂, caractérisée en ce que l'additif est présent selon une quantité allant de 1 à 2% en poids de la cathode.

2. Pile électrochimique suivant la revendication 1, dans laquelle ladite anode inclut du zinc et ledit électrolyte est un électrolyte alcalin.
